# FASCICULE DE BREVET EUROPEEN

(11) **EP 0 335 778 B1**
(45) Date de publication et mention de la délivrance du brevet: **26.10.1994**
(21) Numéro de dépôt: 89400818.4
(22) Date de dépôt: 23.03.1989
(51) Int. Cl.: F16B 5/06

(54) **Dispositif de jonction par "clipsage" de deux pièces par emboîtement**
Schnappverbindungsvorrichtung für zwei ineinandergesteckte Teile
Snap-in connecting device for two interlocking parts

(30) Priorité: 25.03.1988 FR 8803933; 08.12.1988 FR 8816133
(43) Date de publication de la demande: 04.10.1989
(73) Titulaire: Girardiere, Christian, F-75116 Paris (FR)
(72) Inventeur: Pugliesi-Conti, Jérôme, 92120 Saint-Cloud (FR)
(74) Mandataire: Bloch, Gérard

(56) Documents cités:
- EP-A- 0 161 958
- FR-A- 2 269 281
- US-A- 3 971 580
- US-A- 4 184 302

## Description

La présente invention concerne les dispositifs de jonction par "clipsage" de deux pièces de forme quelconque par emboîtement, perpendiculairement à leurs surfaces de jonction, d'au moins un élément saillant de la surface de jonction de l'une des pièces, après légère déformation de celui-ci, dans un évidement de la surface de jonction de l'autre pièce, et accrochage dudit élément saillant, par rappel élastique de celui-ci sur une partie de surface dudit évidement (EP-A-0 161 958).

Les pièces à joindre par ce dispositif d'emboîtement et clipsage, peuvent être de natures très variées, par exemple des éléments de parois, profilés, planches, toitures, ridelles et cloisons quelconques.

Ce type de jonction assure un bon verrouillage mais ne permettait pas un déverrouillage, donc un démontage, facile des pièces après jonction.

L'invention a pour but d'assurer notamment une telle facilité de déverrouillage.

A cet effet, l'invention prévoit de ménager à l'intérieur du dispositif un moyen agencé, quand il est actionné, pour écarter ledit saillant d'acrochage de la partie sur laquelle il est accroché, à l'encontre de la force élastique de rappel dudit saillant et des moyens sont prévus pour actionner de l'extérieur du dispositif ledit moyen d'écartement.

Dans une forme de réalisation dans lequel ledit moyen d'écartement est un joint gonflable monté entre ledit élément saillant et ladite partie et raccordé à une source de pression.

Dans une forme de réalisation voisine, l'écartement est provoqué par rétraction du joint sous vide.

Dans une autre forme de réalisation, ledit moyen d'écartement est constitué par une chambre étanche à l'air dont une partie au moins dudit élément saillant constitue une partie de paroi de ladite chambre, et qui est disposée de telle manière qu'une différence entre la pression dans cette chambre et la pression extérieure provoque l'écartement dudit saillant de la partie sur laquelle il est accroché, et qu'il est prévu un conduit traversant au moins une des pièces à joindre pour déboucher, d'une part, à l'extérieur, d'autre part dans ladite chambre et permettant de la craccorder à une machine pneumatique c'est-à-dire une source de pression ou de vide.

Lorsque ladite chambre doit être raccordée à une source de vide, elle peut par exemple être réalisée, soit par contact serré, matière sur matière, d'élément saillant d'une pièce contre une paroi de l'autre pièce, soit par les saillants d'une des pièces et des joints élastiques aux extrémités desdits saillants, soit par les saillants d'une des pièces et une membrane élastique reliant leurs extrémités, soit encore par les saillants d'une des pièces et une paroi reliant leurs extrémités, venue d'une pièce avec eux. Sous ces deux dernières formes de réalisation, par exemple, le dispositif selon l'invention permet d'assurer facilement le "clipsage" de pièces de grandes dimensions notamment en raccordant la chambre au vide, provoquant ainsi le rapprochement des saillants d'accochage.

Lorsque ladite chambre doit être raccordée à une source de fluide sous pression, elle peut, par exemple, être ménagée entre au moins un saillant d'une despièces et la paroi de l'autre pièce sur laquelle ledit saillant est accroché.

L'agencement selon l'invention présente, on le voit, une très grande simplicité de réalisation et d'emploi, puisqu'il ne comporte aucun élément matériel actif monté sur les pièces à joindre et qu'il peut s'envisager sur les systèmes de jonction par clipsage de pièces de formes les plus variées.

Lorsque l'aire de la surface de jonction des pièces est faible, par exemple dans le cas de jonction de deux panneaux disposés perpendiculairement l'un à l'autre, les éléments saillants d'accrochage et la chambre étanche peuvent faire partie d'une pièce séparée logée dans une cavité d'une des pièces.

Afin de faciliter le clipsage des deux pièces, cette pièce séparée peut être montée coulissante dans cette cavité, éventuellement rappelée par un ressort.

A titre nullement limitatif, on a représenté au dessin annexé diverses formes de réalisation de dispositifs de jonctions, selon l'invention, dessin sur lequel:
- les figures 1, 2 et 3 sont des vues en coupe horizontale, perpendiculaire au plan de joint de deux panneaux assemblés par clipsage et déverrouillage par joint gonflable,
- la figure 4 est une vue similaire à celle des figures 1 à 3, mais avec déverrouillage par joint rétractable,
- les figures 5 à 10 sont des vues en coupe de parois, ou profils, en position de jonction, et
- les figures 11 à 12 sont des vues en coupe, d'un mécanisme d'assemblage de deux profils ou panneaux disposés perpendiculairement l'un à l'autre.

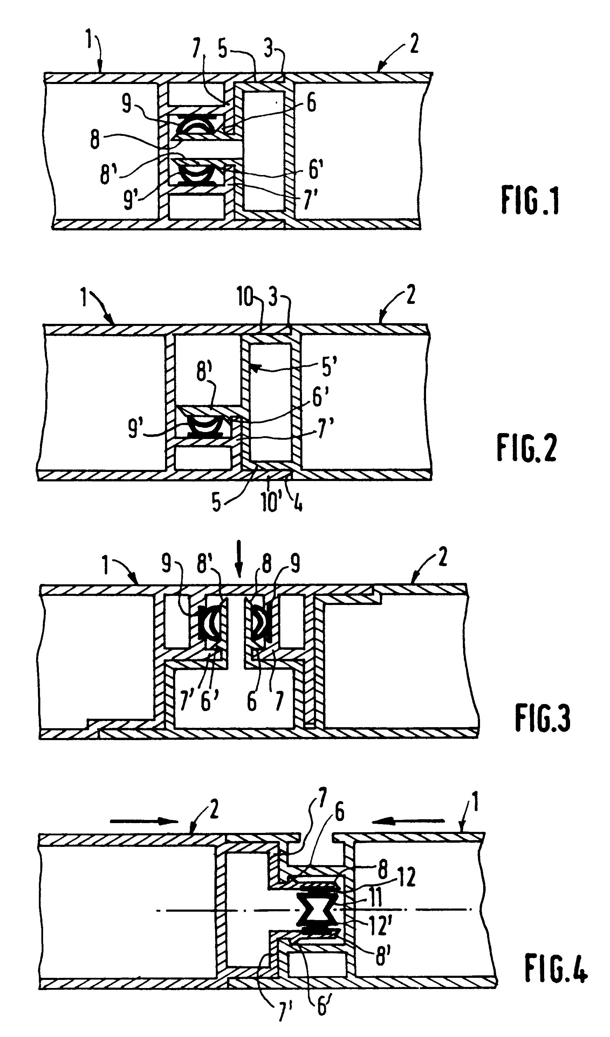

Dans l'exemple de la figure 1 les deux panneaux sont constitués par des profilés 1 et 2 à parois parallèles entre lesquelles est logé un matériau tel qu'une matière plastique alvéolaire ou du bois.

Chaque panneau 2 présente, sur l'une de ses faces d'extrémité 3 destinée à venir en contact avec une face d'extrémité 4 du panneau adjacent 1, des éléments en saillie 5, 5′ par rapport au plan de joint et symétriques par rapport au plan médian du panneau et qui présentent au voisinage de leurs extrémités 8, 8′ des e rgots 6, 6′ s'écartant de ce plan médian.

Chaque panneau 1 présente sur l'autre de ses faces d'extrémité 4 des cloisons 7, 7′ intérieures, symétriques par rapport au plan médian du panneau. La forme et la disposition respectives des cloisons 7, 7′ et des éléments 5, 5′ sont telles que lorsque le panneau 2 est déplacé par translation vers le panneau 1, les éléments 5, 5′ s'engagent par les extrémités 8, 8′ dans l'espace compris entre les cloisons 7, 7′. Les ergots 6, 6′ butent alors contre ces cloisons et la pénétration des éléments 5, 5′ ne peut se poursuivre que grâce à une légère déformation élastique des extrémités 8, 8′ qui les rapproche l'une de l'autre. Lorsque les ergots 6, 6′ ont franchi les cloisons 7, 7′, ces extrémités 8, 8′ sont rappelées élastiquement dans leurs positions initiales et les ergots 6, 6′ sont accrochés contre les cloisons 7, 7′. Les faces d'extrémité 3, 4 sont alors en contact l'une avec l'autre. La jonction des panneaux 1 et 2 est verrouillée aussi bien dans le sens longitudinal de l'emboîtement que dans le sens transversal. Mais, dans cette position, les extrémités 8, 8′ des éléments 5, 5′ se trouvent elles-mêmes en contact avec la paroi souple de tubes 9, 9′ gonflables fixés au profilé 1.

Grâce à ces tubes 9, 9′ on voit que leur gonflage par tout moyen approprié et source extérieure à la paroi, provoque le rapprochement des extrémités 8, 8′ donc dégage les ergots 6, 6′ des cloisons 7, 7′ et déverrouille le système de jonction des panneaux. Ceux-ci peuvent alors être écartés l'un de l'autre par déplacement en sens inverse de la direction d'emboîtement.

Dans l'exemple de la figure 2, il n'est prévu qu'un couple de saillants d'accrochage, à savoir le bras 8' et son ergot 6′ sur le profilé 2 et la cloison 7′ sur le profilé 1. Le verrouillage en direction transversale par rapport à la direction d'emboîtement est assurée par la venue en butée des parois d'extrémité 5, 5′ du profilé 2 contre les parois d'extrémité 10, 10′ du profilé 1.

L'exemple de la figure 3 représente une jonction de deux profilés 1, 2 par le même système de "clipsage" que celui représenté sur la figure 1, mais où l'emboîtement des saillants d'accrochage 8, 8′ du profilé 2 dans le profilé 1 s'opère en direction transversale c'est-à-dire perpendiculaire au plan médian longitudinal des profilés.

On retrouve les ergots 6, 6′ venant s'accrocher contre les cloisons 7, 7′ et les joints gonflables 9, 9′ assurant le déverrouillage en sens inverse de l'emboîtement.

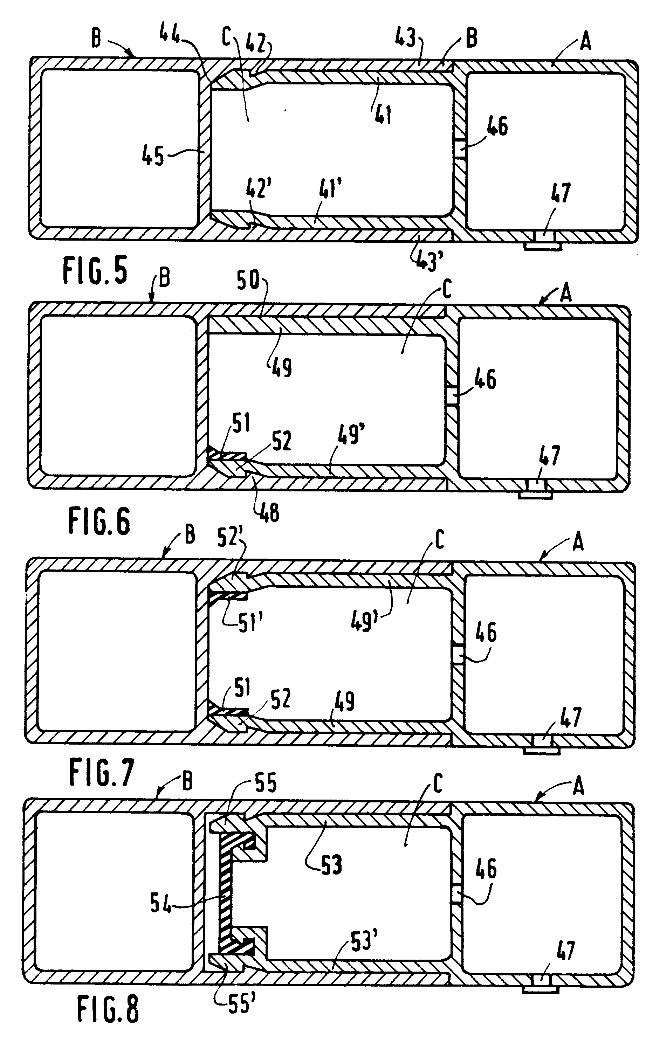

L'exemple de la figure 4 représente une jonction du même type que celle de la figure 1,mais dans laquelle le déverrouillage est opéré par rétraction sous l'effet du vide d'un joint 11 dont les faces opposées 12, 12′ sont fixées aux bras 8 et 8′.

Le moyen de déverrouillage par joint gonflable ou rétractable présente l'avantage de faire jouer à ce joint également le rôle de joint d'étanchéité, mais on pourrait substituer à ce moyen d'autres équivalents, c'est-à-dire tout moyen provoquant l'écartement de la saillie d'un des panneaux de la butée d'accrochage de l'autre panneau. C'est ainsi, par exemple, que pourraient être utilisés comme moyen d'écartement un vérin pneumatique ou hydraulique ou un moyen utilisant les propriétés du champ magnétique, par exemple, un électro-aimant.

Dans l'exemple de la figure 5, les panneaux A et B sont emboîtés et verrouillés par accrochage des deux parties 41, 41′ du panneau A sur les saillants 42, 42′ des parties 43, 43′ du panneau B. Une chambre étanche C est réalisée par contact serrée matière sur matière des parois 41-43 et 41′, 43′ et des extrémités d'accrochage 44, 44′ contre la paroi 45 du panneau B. Le conduit 46 débouche dans la chambre C et par le raccord 47 il peut être branché sur une pompe à vide. La création d'une dépression dans la chambre C fait s'écarter l'une de l'autre les parois 41 et 43 et les parois 41′, 43′ ce qui provoque le décrochage des parois 41, 41′ des saillants 42, 42′, c'est-à-dire le déclipsage et le désemboîtement des panneaux A et B.

Dans l'exemple de la figure 6 le clipsage est assuré par un seul saillant 48 et l'étanchéité de la chambre C est assurée par contact direct de la partie lisse 49 du panneau A sur la partie lisse 50 du panneau B et par un joint élastique 51 à l'extrémité du saillant d'accrochage 52, la partie 49 ayant une rigidité plus importante que la partie 49′.

La disposition représentée à la figure 7 est similaire à celle de la figure 2, mais deux saillants d'accrochage et deux joints élastiques d'étanchéité, ou terminaisons élastiques des saillants 52, 52′ issus de fabrication.

Dans l'exemple de la figure 8, la chambre étanche C est délimitée par les saillants 53, 53′ du panneau A et une membrane élastique 54 reliant les extrémités d'accrochage 55, 55′ des saillants 53, 53′.

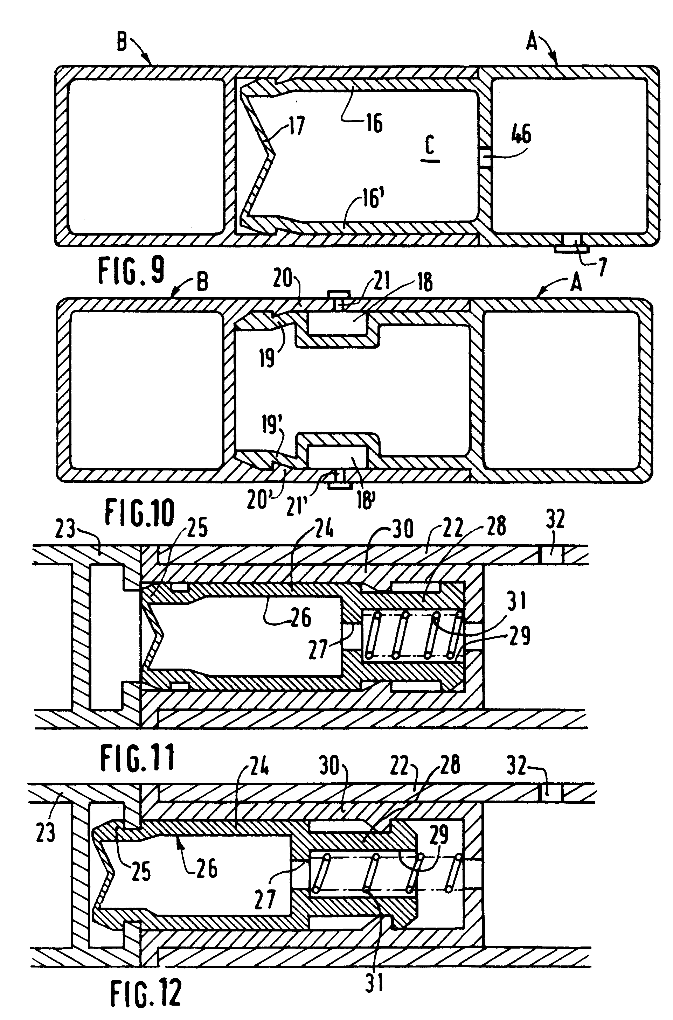

Dans l'exemple de la figure 9, la chambre étanche C est délimitée par les saillants 16, 16′ du profil A et une paroi 17 reliant les extrémités des saillants 16, 16′ et issue de la même fabrication (extrusion, filage). Le vide créé à l'intérieur de la chambre C provoque la déformation de la paroi 17 et le décrochage des saillants 16, 16′.

On voit que, dans ces cas, notamment, il est facile de "clipser" les pièces A et B sans effort, en créant le vide dans la chambre C avant l'emboîtement de la pièce A dans la pièce B, pour proquer le rapprochement des saillants 16, 16′ l'un de l'autre.

Dans l'exemple de la figure 10, il est ménagé deux chambres étanches 18, 18′ entre les saillants d'accrochage 19, 19′ du panneau A et les parois 20, 20′ du profil B. L'introduction d'air, ou autre gaz, comprimé par le conduit 21, 21′ dans les chambres 18, 18′ écarte les saillants et les décroche assurant le déverrouillage de la jonction.

Les figures 11 et 12 illustrent l'utilisation d'un dispositif de jonction selon l'invention pour assurer l'assemblage de deux profils 22, 23 disposés perpendiculairement l'un à l'autre.

Au profil 22, ici vertical, est associée une pièce 24 à saillants de clipsage 25, 25′ et présentant une chambre 26 communiquant avec l'extérieur par un petit orifice 27. La pièce 24 se prolonge par un embout cylindrique 28 muni d'un alésage 29 et dans lequel débouche l'orifice 27. La pièce 24 est montée coulissante dans un manchon 30 solidaire du profil 22, entre une première position où elle est totalement intérieure aumanchon et une seconde position où les saillants 25, 25′ sont extérieurs à celui-ci, un ressort 31 rappelant la pièce 24 vers sa seconde position.

La figure 12 représente la situation dans laquelle les deux profils 22 et 23 sont joints et verrouillés par clipsage.

En raccordant l'orifice 32 à une source de vide, celui-ci, agissant dans la chambre 26, d'une part, provoque le rapprochement des saillants 25, 25′ dont le déverrouillage, d'autre part, la compression du ressort 31 ramenant la pièce de clipsage 24 dans la position de la figure 11.

En supprimant l'effet du vide, le ressort 31 provoque la coulissement de la pièce 24 dans son manchon 30 et son clipsage par déformation élastique des saillants 25, 25′ sur le profil 23.

Dans une variante, le ressort 31 est supprimé et son action est remplacée par celle d'air, ou autre fluide, comprimé.

## Revendications

1. Dispositif de jonction par "clipsage" de deux pièces de forme quelconque par emboîtement, perpendiculairement à leurs surfaces de jonction, d'au moins un élément saillant de la surface de jonction de l'une des pièces, après légère déformation de celui-ci dans un évidement de la surface de jonction de l'autre pièce, et accrochage dudit élément saillant, par rappel élastique de celui-ci, sur une partie de surface dudit évidement, caractérisé par le fait qu'il est ménagé à l'intérieur du dispositif un moyen (9,C) agencé, quand il est actionné, pour écarter ledit saillant d'accrochage (8,41) de la partie (7,43) sur laquelle il est accroché, à l'encontre de la force élastique de rappel dudit saillant et des moyens sont prévus pour actionner de l'extérieur du dispositif ledit moyen d'écartement.

2. Dispositif selon la revendication 1 dans lequel ledit moyen d'écartement est un joint gonflable monté entre ledit élément saillant et ladite partie et raccordé à une source de pression.

3. Dispositif selon la revendication 1, dans lequel ledit moyen d'écartement est un joint rétractable sous l'effet du vide.

4. Dispositif selon la revendication 1, dans lequel ledit moyen d'écartement est un moyen soumis à l'action d'un champ magnétique, par exemple un électro-aimant.

5. Dispositif selon la revendication 1, dans lequel ledit moyen d'écartement est un vérin pneumatique ou hydraulique.

6. Dispositif selon la revendication 1, dans lequel ledit moyen d'écartement est constitué par une chambre étanche à l'air dont une partie au moins dudit élément saillant constitue une partie de paroi de ladite chambre, et qui est disposée de telle manière qu'une différence entre la pression dans cette chambre et la pression extérieure provoque l'écartement dudit saillant de la partie sur laquelle il est accroché, et qu'il est prévu un conduit traversant au moins une des pièces à joindre pour déboucher, d'une part, à l'extérieur, d'autre part dans ladite chambre et permettant de la raccorder à une machine pneumatique c'est-à-dire une source de pression ou de vide.

7. Dispositif selon la revendication 6, dans lequel la chambre étanche est réalisée par contact serré, matière sur matière, d'élément saillant (49) d'une pièce (A) contre une paori (50) de l'autre pièce (B).

8. Dispositif selon la revendication 6, dans lequel la chambre étanche est réalisée par les saillants d'une des pièces et des joints élastiques (51, 51′) aux extrémités desdits saillants.

9. Dispositif selon la revendication 6, dans lequel la chambre étanche est réalisée par les saillants d'une des pièces et une membrane élastique (54) reliant leurs extrémités.

10. Dispositif selon la revendication 6, dans lequel la chambre d'étanchéité est réalisée par les saillants d'une des pièces et une paroi (57) reliant leurs extrémités, venue d'une pièce avec eux.

11. Dispositif selon la revendication 6, dans lequel la chambre étanche est ménagée entre au moins un saillant (19) d'une des pièces (A) et la paroi (20) de l'autre pièce (B) sur laquelle ledit saillant est accroché.

12. Dispositif selon l'une des revendications 6 à 11, dans lequel les éléments saillants (25,26) d'une des pièces (22) et la chambre étanche (C) font partie d'une pièce (24) séparée logée dans une cavité de ladite pièce.

## Claims

1. A device for joining by "clipping" two pieces of any shape by means of fitting, perpendicular to their joining surfaces, at least one element projecting from the joining surface of one of the pieces, after slight deformation of the element into a recess in the joining surface of the other piece, and hooking the said projecting element, by elastic return movement thereof, to a part of the surface of the said recess, characterised in that inside the device, a means (9, C) is provided arranged, when actuated, to distance the said hooking projection (8, 41) from the part (7, 43) to which it is hooked, against the elastic return force of the said projection and means are provided to actuate the said distancing means from outside the device.

2. A device according to claim 1, in which the said distancing means is an inflatable joint mounted between the said projecting element and the said part and connected to a pressure source.

3. A device according to claim 1, in which the said distancing means is a vacuum-operated retractable joint.

4. A device according to claim 1, in which the said distancing means is a means exposed to the effect of a magnetic field, for example an electro magnet.

5. A device according to claim 1, in which the said distancing means is a pneumatic or hydraulic jack.

6. A device according to claim 1, in which the said distancing means is comprised of a chamber sealed air-tight, of which a part at least of the said projecting element constitutes a part of the wall of the said chamber, and which is disposed in such a way that a difference between the pressure in this chamber and the outside pressure causes the said projection to be distanced from the part to which it is hooked, a duct is provided crossing at least one of the pieces to be joined to issue, on the one side, on the outside and, on the other side, into the said chamber and allowing it to be connected to a pneumatic machine, ie a source of pressure or vacuum.

7. A device according to claim 6, in which the sealed chamber is produced by a tight contact, material to material, of the projecting element (49) of one piece (A) against a wall (50) of the other piece (B).

8. A device according to claim 6, in which the sealed chamber is produced by the projections of one of the pieces and the elastic joints (51, 51') at the ends of the said projections.

9. A device according to claim 6, in which the sealed chamber is produced by the projections of one of the pieces and an elastic membrane (54) connecting their ends.

10. A device according to claim 6, in which the sealed chamber is produced by the projections of one of the pieces and a wall (57) connecting their ends, formed as one piece with them.

11. A device according to claim 6, in which the sealed chamber is provided between at least one projection (19) of one of the pieces (A) and the wall (20) of the other piece (B) to which the said projection is hooked.

12. A device according to one of claims 6 to 11, in which the projecting elements (25, 26) of one of the pieces (22) and the sealed chamber (C) are part of a separate piece (24) housed in a recess of the said piece.

## Patentansprüche

1. Vorrichtung zum Verbinden durch "Einschnappen" zweier Teile beliebiger Form durch Einstecken, senkrecht zu ihrer Verbindungsfläche, wenigstens eines von der Verbindungsfläche eines der Teile vorspringenden Elements nach dessen leichter Verformung in eine Vertiefung der Verbindungsfläche des anderen Teils und Einhaken des besagten vorspringenden Elements durch dessen Zurückfedern auf einen Teil der Oberfläche der besagten Vertiefung, dadurch **gekennzeichnet**, daß im Inneren der Vorrichtung eine Einrichtung (9,C) vorhanden ist, die so eingerichtet ist, daß sie, wenn sie betätigt wird, den besagten Vorsprung zum Einhaken (8,41) von dem Teil (7,43), auf dem er eingehakt ist, gegen die Rückfederkraft des besagten Vorsprungs abspreizt, wobei Mittel vorgesehen sind, um die besagte Abspreizeinrichtung von außen her zu betätigen.

2. Vorrichtung nach Anspruch 1, dadurch **gekennzeichnet**, daß die besagte Abspreizeinrichtung ein aufblasbares Verbindungselement ist, das zwischen dem besagten vorspringenden Element und dem besagten Teil gehalten ist und an eine Druckquelle angeschlossen ist.

3. Vorrichtung nach Anspruch 1, dadurch **gekennzeichnet**, daß die besagte Abspreizeinrichtung ein durch Unterdruck zurückziehbares Verbindungselement ist.

4. Vorrichtung nach Anspruch 1, dadurch **gekennzeichnet**, daß die besagte Abspreizeinrichtung ein der Wirkung eines Magnetfeldes unterworfenes Mittel ist, z.B. ein Elektromagnet.

5. Vorrichtung nach Anspruch 1, dadurch **gekennzeichnet**, daß die besagte Abspreizeinrichtung ein pneumatischer oder hydraulischer Stempel ist.

6. Vorrichtung nach Anspruch 1, dadurch **gekennzeichnet**, daß die besagte Abspreizeinrichtung aus einer luftdichten Kammer besteht, wobei wenigstens ein Teil des besagten vorspringenden Elements einen Teil der Wand der besagten Kammer bildet, die so eingerichtet ist, daß ein Unterschied zwischen dem Druck in dieser Kammer und dem Außendruck das Abspreizen des besagten Vorsprungs von dem Teil bewirkt, auf dem er eingehakt ist, und wobei eine Leitung vorgesehen ist, die durch wenigstens eines der zu verbindenden Teile hindurchgeht, um einerseits in die Umgebung zu münden und andererseits in die besagte Kammer, wobei sie ermöglicht, daß diese an eine Druckluftvorrichtung, d.h. eine Druck- oder Unterdruckquelle angeschlossen wird.

7. Vorrichtung nach Anspruch 6, dadurch **gekennzeichnet**, daß die undurchlässige Kammer durch festen Kontakt, Material auf Material, des vorspringenden Elements (49) eines Teils (A) gegen eine Wand (50) des anderen Teils (B) gebildet wird.

8. Vorrichtung nach Anspruch 6, dadurch **gekennzeichnet**, daß die undurchlässige Kammer durch die Vorsprünge eines der Teile und elastische Verbindungselemente (51,51') an den Endabschnitten der besagten Vorsprünge gebildet wird.

9. Vorrichtung nach Anspruch 6, dadurch **gekennzeichnet**, daß die undurchlässige Kammer durch die Vorsprünge eines der Teile und eine elastische Membran (54), die deren Endabschnitte verbindet, gebildet wird.

10. Vorrichtung nach Anspruch 6, dadurch **gekennzeichnet**, daß die undurchlässige Kammer durch die Vorsprünge eines der Teile und eine Wand (57), die deren Endabschnitte verbindet und mit ihnen aus einem Teil besteht, gebildet wird.

11. Vorrichtung nach Anspruch 6, dadurch **gekennzeichnet**, daß die undurchlässige Kammer zwischen wenigstens einem Vorsprung (19) eines der Teile (A) und der Wand (20) des anderen Teils (B), in welches der besagte Vorsprung eingehakt ist, angeordnet ist.

12. Vorrichtung nach einem der Ansprüche 6 bis 11, dadurch **gekennzeichnet**, daß die vorspringenden Elemente (25, 26) eines der Teile (22) und die undurchlässige Kammer (C) einen Teil eines abgetrennten Teils (24) bilden, das in einem Hohlraum des besagten Teils untergebracht ist.
